# EUROPEAN PATENT SPECIFICATION

(11) **EP 4 280 372 B1**
(45) Date of publication and mention of the grant of the patent: **12.03.2025**
(21) Application number: 23152766.4
(22) Date of filing: 20.01.2023
(51) Int. Cl.: H01M 50/636, H01M 50/152, H01M 50/342, H01M 50/559, H01M 50/627

(54) **BATTERY CELL AND BATTERY**
BATTERIEZELLE UND BATTERIE
ÉLÉMENT DE BATTERIE ET BATTERIE

(30) Priority: 17.05.2022 CN 202221185440 U
(43) Date of publication of application: 22.11.2023
(73) Proprietor: Shenzhen Bak Power Battery Co., Ltd., Shenzhen, Guangdong 518000 (CN)
(72) Inventor: FAN, Wenguang, Shenzhen, GUANGDONG, 518000 (CN); XU, Yan, Shenzhen, GUANGDONG, 518000 (CN); HE, Jieqing, Shenzhen, GUANGDONG, 518000 (CN)
(74) Representative: Chimini, Francesco

(56) References cited:
- EP-B1- 1 079 454
- KR-B1- 100 559 363
- KR-B1- 102 247 396
- US-A1- 2005 271 938
- US-A1- 2010 216 001

## Description

### TECHNICAL FIELD

The present application relates to the field of battery technology, and more particularly to a battery cell, and a battery.

### BACKGROUND

With the rapid development of new energy vehicles and the practicalization of superfast charging technology, a cooling method of power battery has been upgraded from air cooling to liquid cooling. Furthermore, full immersion oil cooling has also entered the visions of automobile manufacturers. The fully immersed oil cooling is able to bring out the performances of high performance battery cells, prolong service life of the battery cells, and perfectly solve the problems of thermal runaway and failure propagation, and thus has attracted a large number of people's interests due to its extremely high heat exchange efficiency, uniform temperature distribution, and extremely strong passive thermal safety. It is found that steel beads which are most frequently used to be squeezed into the electrolyte injection hole for sealing is of a possibility of falling out or causing an electrolyte leakage under an extreme temperature condition due to different material expansions rate.

It should be noted that the aforesaid information disclosed in the background is only intended to enhance the interpretation of the background of the present application and thus may include information that does not constitute as prior art known to one of ordinary skill in the art. The prior art KR 102 247 396 B1, US 2010/216001 A1 and EP 1 079 454 B1 discloses secondary batteries with bursting means to avoid explosions.

### SUMMARY

One objective of the embodiments of the present application is to provide a battery cell and a battery that aim to solve the technical problem that steel beads which are most frequently used to be squeezed into the electrolyte injection hole to seal the electrolyte injection hole, and is of a possibility of falling off or leaking electrolyte under extreme temperature conditions due to the different material expansion rates.

**In** order to achieve the aforesaid objective, the technical solutions adopted in the present application are as follows: a battery cell is provided, the battery cell includes:
a spiral-wound cell;
a first current collector; the first current collector is connected to one end of the spiral-wound cell, and the first current collector is provided with an electrolyte injection hole; and
a cover plate; the cover plate is connected to the first current collector, and the first current collector is located between the spiral-wound cell and the cover plate, in order that the electrolyte injection hole is sealed by the cover plate.

One side of the cover plate facing the first current collector is provided with first bursting line(s) which is/are shaped as groove structures.

In some embodiments, the first current collector is provided with an inner side and an outer side which are opposed to each other, the inner side of the first current collector is connected to the spiral-wound cell, and the cover plate is connected to the outer side of the first current collector; the inner side of the first current collector faces the spiral-wound cell, and is provided with a plurality of second bursting lines, and the plurality of second bursting lines are shaped as groove structures.

In some embodiments, the number of the second bursting lines is plural and the plurality of the second bursting lines are arranged to be spaced apart around a circumference of the electrolyte injection hole in distribution.

In some embodiments, the first current collector is arranged at an anode of the spiral-wound cell, the electrolyte injection hole is arranged at a center of the first current collector, the outer side of the first current collector is provided with an accommodation cavity recessed from one end of the spiral-wound cell to the other end of the spiral-wound cell, and the cover plate is fixed in the accommodation cavity.

In some embodiments, a plurality of bypass holes are arranged on the first current collector, and the plurality of the bypass holes are arranged to be spaced apart around the circumference of the electrolyte injection hole in distribution.

In some embodiments, the battery cell further includes a second current collector, the second current collector is connected to an opposite end of the spiral-wound cell, and is arranged at a cathode of the spiral-wound cell.

In some embodiments, the battery cell further includes a housing and a terminal post. The spiral-wound cell is arranged to insert in the housing, the terminal post is fitted to the housing in an insulation manner through a first insulating member.

The terminal post includes a post part and a radial part connected to one end of the post part. The radial part has a diameter greater than a diameter of the post part, so that the terminal post is fixed on the housing. The radial part is connected to the second current collector.

In some embodiments, the battery cell is cylindrical.

In the present application, a battery is further provided, the battery includes the aforesaid battery cell.

The beneficial effects of the battery cell and the battery according to the present application are mainly described as follows:

According to the battery cell of the present application, the first current collector is connected to one end of the spiral-wound cell and the electrolyte injection hole is arranged on the first current collector, electrolytes are injected through the electrolyte injection hole, and the cover plate is connected to the first current collector, and the first current collector is located between the spiral-wound cell and the cover plate. Thus, the electrolyte injection hole is sealed by the cover plate, so that the sealing of the electrolyte injection hole is quite ensured, the possibility of electrolyte leakage is reduced accordingly, and the safety of the battery cell is guaranteed.

### BRIEF DESCRIPTION OF THE DRAWINGS

In order to describe the embodiments of the present application more clearly, a brief introduction regarding the accompanying drawings that need to be used for describing the embodiments of the present application or the related art is given below.
FIG. 1 illustrates one schematic structural diagram of a battery cell according to one or some embodiments of the present application;
FIG. 2 illustrates another schematic structural diagram of the battery cell according to one or some embodiments of the present application;
FIG. 3 illustrates a schematic exploded view of a part of the battery cell according to one or some embodiments of the present application;
FIG. 4 illustrates a schematic exploded view of the battery cell according to one or some embodiments of the present application;
FIG. 5 illustrates one sectional view of a part of the battery cell according to one or some embodiments of the present application;
FIG. 6 illustrates another sectional view of the part of the battery cell according to one or some embodiments of the present application;
FIG. 7 illustrates a schematic structural diagram of a cover plate according to one or some embodiments of the present application;
FIG. 8 illustrates one schematic structural diagram of a first current collector according to one or some embodiments of the present application;
FIG. 9 illustrates another schematic structural diagram of the first current collector according to one or some embodiments of the present application; and
FIG. 10 illustrates a schematic structural diagram of a second current collector according to one or some embodiments of the present application;

Reference numerals involved in the accompanying figures are listed in detail below:
100-cover plate; 101-spiral-wound cell; 102-first current collector; 103-electrolyte injection hole; 104-first bursting line; 105-second bursting line; 106-accommodation cavity; 107-strip-shaped groove; 108-second current collector; 109-insulating sleeve; 110-housing; 111-terminal post; 112-post part; 113-radical part; 114-end cover; 115-exposed part; 116-axial part; 117-radially convex part; 118-first mounting hole; 119-insulating sheet; 120-second mounting hole; 121-boss part; 122-first insulating member; 123-second insulating member; 124-annular part; 125-axially wrapped part; 126-conductive sheet; 127-insulating ring; 128-notch.

### DETAILED DESCRIPTION OF THE EMBODIMENTS

In order to make the technical problem to be solved, the technical solutions and the advantages of the present application be clearer and more understandable, the present application will be further described in detail below with reference to accompanying figures and embodiments.

It needs to be noted that, when one component is described to be "fixed to" or "arranged on" another component, this component may be directly or indirectly arranged on another component. When it is described that one component "is connected with" another component, this component may be directly or indirectly connected to said another component.

In the description of the present application, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present application conveniently and simplify the description, but not to indicate or imply that an indicated device or component must have specific locations or be constructed and manipulated according to specific locations; therefore, these terms shouldn't be considered as any limitation to the present application.

In addition, terms "the first" and "the second" are only used describing purposes, and should not be considered as indicating or implying any relative importance, or implicitly indicating the number of indicated technical features. As such, technical feature(s) restricted by "the first" or "the second" can explicitly or implicitly comprise one or more such technical feature(s). In the description of the present application, "a plurality of" has the meaning of at least two, unless "a plurality of" is provided with additional explicit and specific limitations.

In order to explain the technical solutions of the present application, the present application are described in detail with reference to the accompanying figures and the embodiments below.

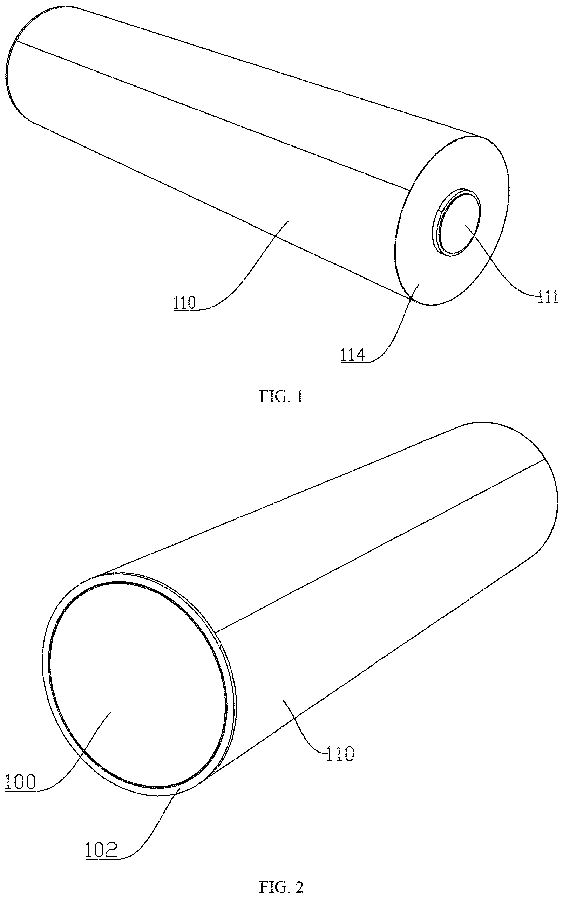

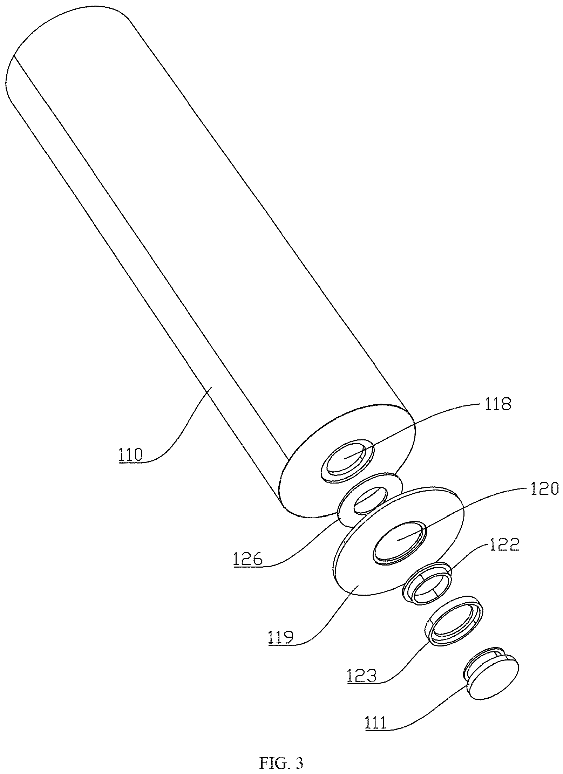

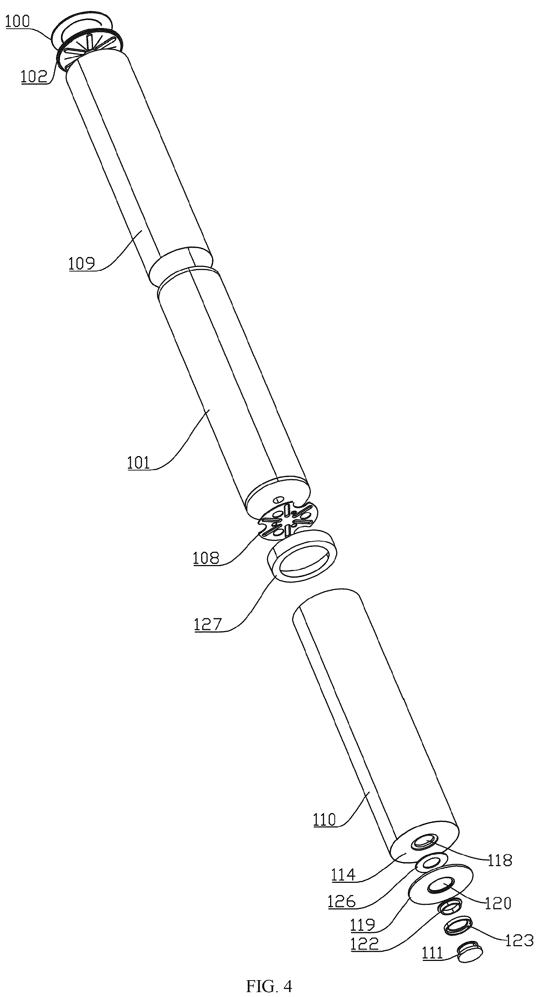

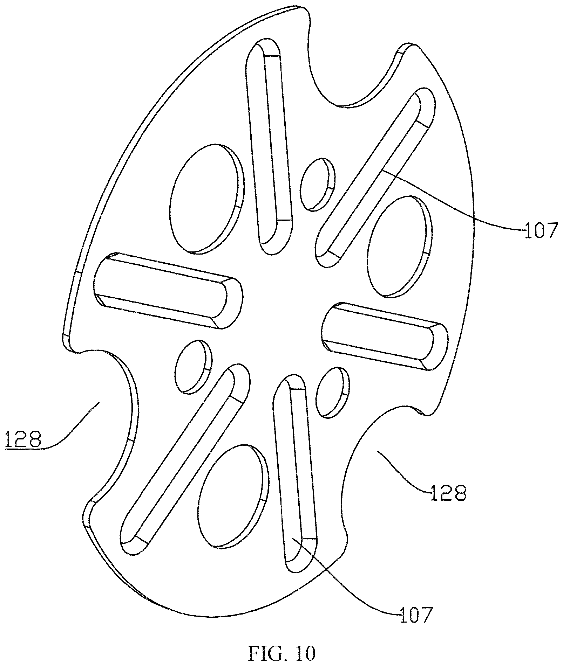

Referring to FIGS. 1 to 10, a battery cell provided in the present application includes: a spiral-wound cell 101, a first current collector 102 and a cover plate 100. The first current collector 102 is connected to one end of the spiral-wound cell 101, and the first current collector 102 is provided with an electrolyte injection hole 103. The cover plate 100 is connected to the first current collector 102, so that the cover plate 100 can seal the electrolyte injection hole 103. The first current collector 102 is located between the spiral-wound cell 101 and the cover plate 100, and then the electrolyte injection hole 103 is sealed using the cover plate 100. During an assembling process of the battery cell, after the electrolytes are injected through the electrolyte injection hole 103 of the first current collector 102, the cover plate 100 is used to seal the electrolyte injection hole 103 to realize sealing of the electrolyte injection hole 103. In at least one embodiment of the present application, the first current collector 102 directly attached to the housing 100 is used as a rear support of the cover plate 100, so that the cover plate 100 is able to withstand a greater impact force from the outside to the inside (i.e., withstand external impact, such as in a drop test) while having a smaller opening pressure from the inside to the outside when the cover plate 100 is not opened. Thus, when the battery cell is used in a cylindrical battery, a safety of the cylindrical battery is ensured.

In some embodiments, the method for sealing the electrolyte injection hole 103 by the cover plate 100 is that orifices of the electrolyte injection hole 103 are sealed by the cover plate 100, or a closed space is formed between the cover plate 100 and the first current collector 102. Since the first current collector 102 is further connected to the spiral-wound cell 101, so that the electrolyte injection hole 103 is not exposed after the first current collector 102 is connected with the cover plate 100, and the appearance of the battery cell is smooth and artistic, and risks of electrolyte leakage and oil seepage are avoided.

In one embodiment, the cover plate 100 and the first current collector 102 are connected by welding. Since the diameters of the cover plate 100 and the first current collector 102 are much greater than that of the conventional steel beads, welded joints having greater diameters can be formed when welding is used, so that a reduction of welding cracks and an improvement of the yield are facilitated. By welding the cover plate 100 with the first current collector 102, a traditional condition of steel beads falling out under extreme temperature due to different material expansion rates is further avoided, and the tightness and the stability of the connection between the cover plate 100 and the first current collector 102 are ensured by welding.

In the present application, the first current collector 102 is connected to one end of the spiral-wound cell 101 by welding, and the electrolyte injection hole 103 is arranged on the first current collector 102, electrolytes are injected through the electrolyte injection hole 103, and the cover plate 100 is used to be connected to the first current collector 102, so that the electrolyte injection hole 103 is blocked by the cover plate 100, the sealing of the electrolyte injection hole 103 is quite ensured. Thus, a possibility of electrolyte leakage is reduced, and the safety of the battery cell is ensured.

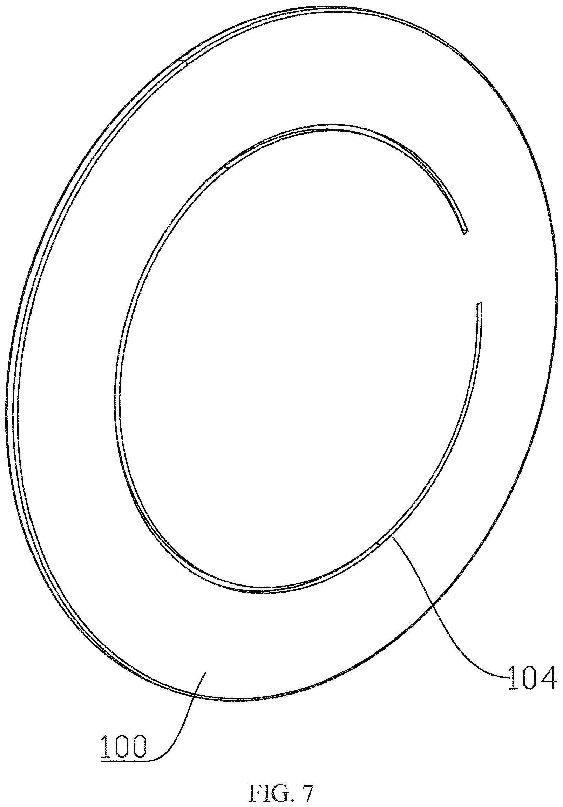

Referring to FIG. 7, one side of the cover plate 100 facing the first current collector 102 is provided with first bursting line(s) 104, and the first bursting line(s) 104 is/are shaped as groove structure(s). The cover plate 100 has a function of sealing the injection hole 103 and an explosion-proof function. The first bursting line(s) 104 is/are arranged on the side of the cover plate 100 facing the first current collector, so that the first bursting line(s) 104 is avoided from being exposed. A condition of hiding dirt inside the first bursting line(s) 104 is avoided as compared to the conventional arrangement of exposed bursting lines, a cleanliness of coolant oil is ensured, and the appearance of the battery cell is smooth and artistic, and the risks of electrolyte leakage and oil seepage are avoided. The first bursting line(s) 104 is/are shaped as groove structure(s), thus, bursting is facilitated, and the safety of the battery cell is ensured.

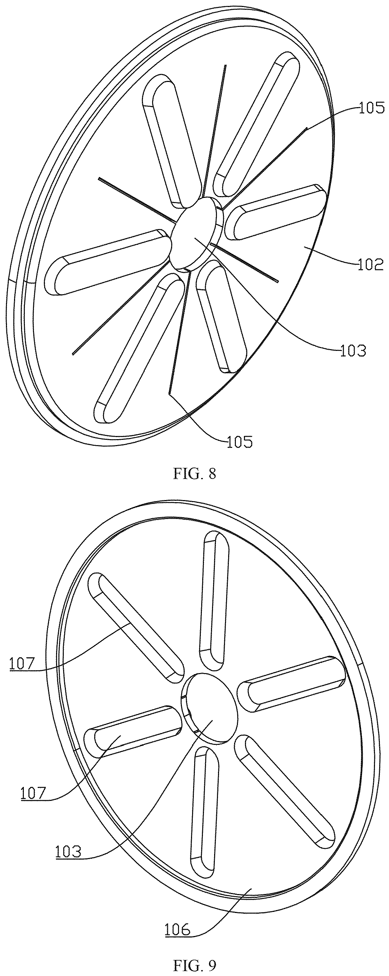

Referring to FIGS. 8 and 9, in some embodiments, the cover plate 100 has a circular shape; the first current collector 102 has a circular shape, and the first bursting line(s) 104 is/are shaped as an arc line, or as a straight line, or as a polygonal line. When the first bursting line(s) 104 is/are shaped as arc, the arc is a circular arc and the circular arc is a major arc or a minor arc. The number of first bursting line(s) 104 is one or plural. When the number of first bursting lines 104 is plural and the plurality of first bursting lines 104 are arcuate, the plurality of first arcuate bursting lines 104 are evenly spaced apart in a circle in distribution, the center of the circle is the center of the cover plate 100. When the number of the first bursting lines 104 is plural and the plurality of first bursting lines 104 are shaped as straight lines, the plurality of straight first bursting lines 104 are arranged in a radial pattern which takes the center of the cover plate 100 as the center.

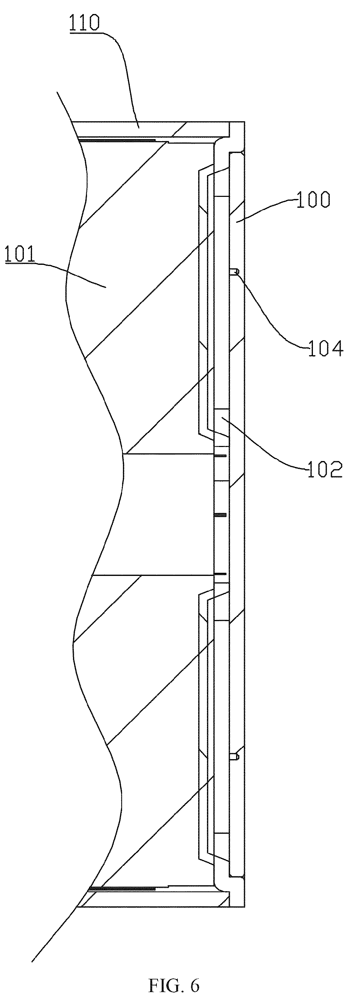

Referring to FIG. 6, in some embodiments, each first current collector 102 has an inner side and an outer side which are opposite to each other, the inner side of the first current collector 102 is connected to the spiral-wound cell 101, and the cover plate 100 is connected to the outer side of the first current collector 102. The inner side of the first current collector 102 faces the spiral-wound cell 101, and is provided with second bursting lines 105 which are shaped as groove structures. By providing the second bursting lines 105, the safety of the battery cell during use is further ensured. The second bursting lines 105 on the first current collector 102 are served as a pathway for electrolyte infiltration and gas discharge during production, the second bursting lines 105 are also served as prefabricated engraved lines for the rupture of the first current collector 102 in case of a thermal runaway. In case of the thermal runaway, the first bursting line(s) 104 on the cover plate 100 is/are fractured first, thereby realizing a gas pressure relief inside the battery cell. When the thermal runaway cannot be terminated after the first bursting line(s) 104 is/are fractured, the subsequently generated high pressure gas will tear the second bursting lines 105 on the first current collector 102, in order that gases with high temperature thermal flows are ejected completely.

In one embodiment, the first current collector 102 is welded with the spiral-wound cell 101. In particular, the first current collector 102 is connected to a tab of the spiral-wound cell 101. The inner side of the cover plate 100 is connected to the outer side of the first current collector 102, the first bursting line(s) 104 is/are located on the inner side of the cover plate 100, and the outer side of the cover plate 100 is exposed. It is worth noting that the first current collector 102 and the spiral-wound cell 101 may be connected directly or indirectly.

In some embodiments, the number of the second bursting lines 105 is plural, and the plurality of second bursting lines 105 are spaced around the circumference of the electrolyte injection hole 103 in distribution. This arrangement facilitates ensuring the safety of the battery cell. Moreover, when bursting occurs, the bursting is prone to occur at the position of the electrolyte injection hole 103.

In some embodiments, one end of each second bursting line 105 is extended to an edge of the electrolyte injection hole 103, that is, one end of an opening of the groove structure in length direction is located on a hole wall of the electrolyte injection hole 103. This arrangement further realizes the bursting occurring more likely at the position of the electrolyte injection hole in case of the occurrence of the bursting, and the safety of the battery cell is ensured during use.

In one embodiment, the second bursting lines 105 are shaped as straight lines, and the plurality of second bursting lines 105 are arranged in a radial pattern which takes the center of the hole of the electrolyte injection hole 103 as the center, that is, each second bursting line 105 has a length direction extended in the radial direction of the first current collector 102.

In some embodiments, the first current collector 102 is arranged at an anode of the spiral-wound cell 101, that is, the first current collector 102 is connected to an anode tab of the spiral-wound cell 101, the electrolyte injection hole 103 is arranged at the middle of the first current collector 102, the outer side of the first current collector 102 is provided with an accommodating cavity 106 recessed from one end of the spiral-wound cell 101 to the other end of the spiral-wound cell 101, and the cover plate 100 is fixed in the accommodating cavity 106. In at least one embodiment, the electrolyte injection hole 103 is arranged at the middle of the first current collector 102, which facilitates simplification of mass production process and enables more accurate alignment with the electrolyte injection hole, and facilitates automatic electrolyte injection and the positioning of negative pressure formation procedure, etc., as compared to other methods of arrangement of the electrolyte injection hole in an offset position.

In one embodiment, the thickness of the cover plate 100 is equal to the depth of the accommodating cavity 106, that is, after the cover plate 100 is fixed in the accommodating cavity 106, the outer side of the cover plate 100 is flush with an outer surface of the first current collector 102, so that one end surface of the anode of the battery cell is flat. The cover plate 100 is welded in the cavity of the current collector 102, so that the battery cell has a smooth appearance. Due to the large diameter welding surface, a problem of stress concentration during welding is avoided, and the improvement of the yield of welding is facilitated. It should be noted that the accommodating cavity 106 can be formed by stamping.

In some embodiments, a bottom of the accommodating cavity 106 of the first current collector 102 has a plurality of strip-shaped recesses 107, and the plurality of strip-shaped recesses 107 are radially distributed, and a length of each strip-shaped recess 107 extends along the radial direction of the first current collector 102. The plurality of strip-shaped recesses 107 are provided at the bottom of the accommodating cavity when viewed from the outer side of the first current collector 102, while the walls and bottoms of the plurality of strip-shaped recesses 107 are protruded from the inner side of the first current collector 102 when viewed from the inner side of the first current collector 102, so that strip-shaped bosses are formed. Each second bursting line 105 is located between two adjacent strip-shaped bosses. It needs to be noted that the strip-shaped recesses 107 may be formed by stamping.

In some other embodiments, a plurality of bypass holes are further provided on the first current collector 102, and the plurality of bypass holes are spaced around the circumference of the electrolyte injection holes 103 in distribution.

In some embodiments, the battery cell further includes a second current collector 108, the second current collector 108 is connected to the opposite end of the spiral-wound cell 101. The second current collector 108 is connected to a tab at the opposite end of the spiral-wound cell 101. The second current collector 108 is arranged at a cathode of the spiral-wound cell 101, in other words, the second current collector 108 is connected to a cathode tab of the spiral-wound cell 101.

In some embodiments, the outer side of the second current collector 108 has a plurality of strip-shaped recesses 107, the plurality of strip-shaped recesses 107 are radially distributed, and the length of each strip-shaped recess 107 is extended along the radial direction of the second current collector 108. The plurality of strip-shaped recesses 107 are observed from the outer side of the second current collector 108, while the walls and the bottoms of the plurality of strip-shaped recesses 107 are protruded from the inner side of the second current collector 108 when viewed from the inner side of the second current collector 108, so that the strip-shaped bosses are formed. A circumferential edge of the second current collector 108 is further provided with a plurality of notches 128, so that the second current collector 108 becomes a deformable and elastic structure that allows a small displacement of the spiral-wound cell 101 in an axial direction without damaging the welded areas between the second current collector 108 and the spiral-wound cell 101, and the welded areas between the first current collector 102 and the spiral-wound cell 101, respectively. It should be noted that in some other embodiments, the second current collector 108 can also be shaped as deformable and elastic structure in other forms.

In one embodiment, the first current collector 102 serves as the current collector at the anode of the spiral-wound cell 101 and the second current collector 108 serves as the current collector at the cathode of the spiral-wound cell 101.

In some embodiments, the battery cell further includes an insulating sleeve 109, the insulating sleeve 109 is cylindrically shaped, and the spiral-wound cell 101 is inserted in the insulating sleeve 109. The battery cell further includes an insulating ring 127 sleeved on one end of the insulating sleeve 109, and the insulating ring 127 is disposed at the opposite end of the spiral-wound cell 101. The insulating ring 127 is further configured to enable the second current collector 108 to be fixed on the insulating sleeve 109. The insulating ring 127 has a through-hole, a terminal post 111 of the battery cell is allowed to pass through the through-hole to be connected to the second current collector 108.

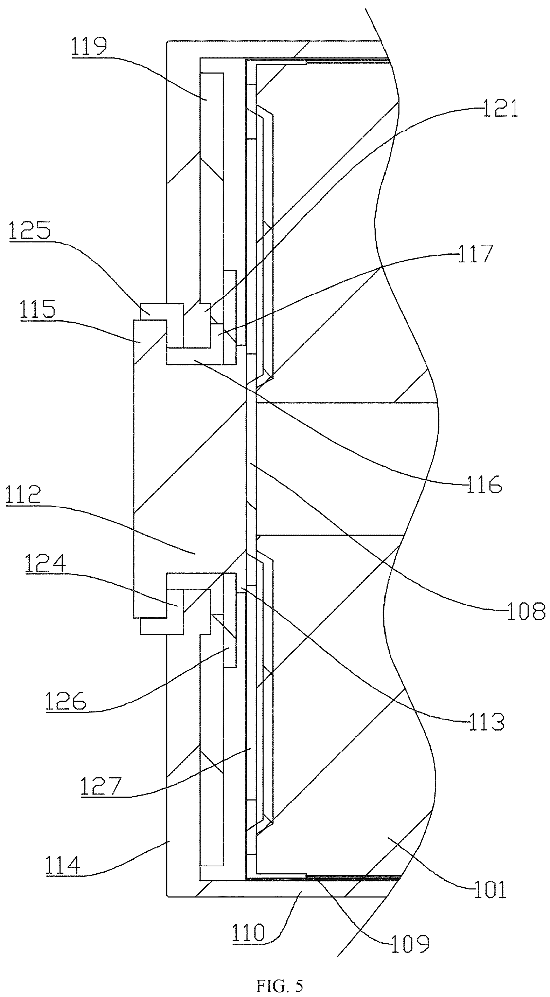

Referring to FIG. 5, in some embodiments, the battery cell further includes a housing 110 and a terminal post 111, the spiral-wound cell 101 is inserted in the housing 110 and the terminal post 111 is insulated with the housing 110 through a first insulating member 122. The terminal post 111 includes a post part 112 and a radial part 113 connected to one end of the post part 112. The radial part 113 has a diameter greater than the diameter of the post part 112, so that the terminal post 111 is fixed on the housing 110 due to this arrangement. The radial part 113 is connected to the second current collector 108. The terminal post 111 is served as a cathode post. Compared with other methods of arranging the electrolyte injection hole on the terminal post, in at least one embodiment of the present application, the electrolyte injection hole 103 is arranged at the center of the anode of the terminal post 111 of the battery cell, so that the electrolyte injection hole 103 is not arranged at the end where the terminal post 111 is located, welding is facilitated, the structure of the battery cell is simplified, and an improvement of an overcurrent capacity of the terminal post 111 is improved. There is no need to add additional arrangement or visual identification procedure in battery module assembly. Additionally, the arrangement of non-exposed electrolyte injection hole 103 and reverse etching first blasting line(s) 104 and the second blasting lines 105 (i.e., arranged at the inner side) enables the whole terminal post 111 to have rotational and symmetrical design, the appearance of the cell is smooth and attractive, the risk of electrolyte leakage and oil seepage is avoided, and the problems that the battery module is difficult to be welded and cleaned, and the like are solved. This arrangement is very suitable for fully immersed oil cooling, and is compatible with conventional cooling methods (including side cooling, bottom cooling, and top cooling) filling glue.

It should be noted that, when the traditional cooling methods are used, the first bursting line(s) 104 and the second bursting lines 105 can be arranged on the outside to reduce a possibility of breakage in production and transportation equipment.

In one embodiment, the housing 110 is cylindrically shaped, and the insulating sleeve 109 is inserted in the housing 110. One end of the housing 110 is opened, and the other end of the housing 110 is provided with an end cap 114, the end cap 114 and the housing 110 are shaped as an integrated structure. The opposite end of the spiral-wound cell 101 and the other end of the housing 110 are arranged at the same side, and the terminal post 111 extends out of the end cap 114. The radial part 113 is formed during a riveting process, the riveting of the terminal post 111 enables the diameter of the radial part 113 to be greater than the diameter of the post part 112 to prevent gas ejection from occurring in case of the thermal runaway.

In some embodiments, the terminal post 111 further includes an exposed part 115, the exposed part 115 is circular in shape and the diameter of the exposed part 115 is greater than the diameter of the post part 112. The material of the first insulating member 122 is an insulating rubber. The first insulating member 122 includes an axial part 116 and a radially convex part 117. The radially convex part 117 is annular in shape. One end of the axial part 116 is connected to the radial convex part 117, and the end face of the opposite end of the axial part 116 abuts against one side of the exposed part 115. The first insulating member 122 is sleeved on the post part 112.

In some embodiments, a center part of the end cap 114 of the housing 110 has a first mounting hole 118, the first mounting hole 118 is a stepped through hole; a big aperture part of the first mounting hole 118 is away from the opposite end of the spiral-wound cell 101, and a small aperture part of the first mounting hole 118 is adjacent to the opposite end of the spiral-wound cell 101.

In some embodiments, the battery cell further includes an insulating sheet 119, the insulating sheet 119 has a second mounting hole 120, the second mounting hole 120 is a stepped through-hole; a big aperture part of the second mounting hole 120 is away from the opposite end of the spiral-wound cell 101, while a small aperture part of the second mounting hole 120 is adjacent to the opposite end of the spiral-wound cell 101. The stepped first mounting hole 118 and the second mounting hole 120 enable the thickness of the exposed part 115 of the terminal post 111 to be increased without increasing the total exposed height of the terminal post 111, thereby supporting a welding of a connection piece having large overcurrent during a battery production process.

In some embodiments, an inner surface of the end cap 114 of the housing 110 is provided with a boss part 121, and the boss part 121 is accommodated in the big aperture part of the second mounting hole 120, so that the second mounting hole 120 of the insulating sheet 119 is coaxial with the first mounting hole 118 of the end cap 114, and the positioning of the insulating sheet 119 on the inner surface of the end cap 114 of the housing 110 in the radial direction is realized. The radially convex part 117 is located at the small aperture part of the second mounting hole 120. The axial part 116 of the first insulating member 122 is arranged to pass through the small aperture part of the first mounting hole 118. The first insulating member 122 realized insulated isolation between the post part 112 of the terminal post 111 and the end cap 114.

In one embodiment, the material of the insulating sheet 119 is Polyfluoroalkoxy (PFA).

In some embodiments, the battery cell further includes a second insulating member 123, the second insulating member 123 is snapped onto the terminal post 111. The second insulating member 123 is further snapped onto the axial part 116 of the first insulating member 122. The material of the second insulating member 123 is PFA.

In some embodiments, the second insulating member 123 includes an annular part 124 and an axially wrapped part 125, and the axially wrapped part125 is connected to one side surface of the annular part 124. The axially wrapped part 125 is configured to wrap the circumference of the exposed part 115 of the terminal post 111, and the annular part 124 is located between the inner side of the exposed part 115 and the bottom of the aperture of the big aperture part of the first mounting hole 118, so that the insulated isolation between the exposed part 115 of the terminal post 111 and the outer surface of the end cap 114 of the housing 110 is realized through the second insulating member 123.

In some embodiments, the battery cell further includes a conductive sheet 126 which is sleeved on the columnar portion 112 of the terminal post 111, one side of the conductive sheet 126 abuts against the insulating sheet 119 and a radially convex part 117, respectively. Thus, the insulated isolation between the conductive sheet 126 and the end cap 114 of the housing 110 is realized through the insulating sheet 119 and the first insulating member 122. The conductive sheet 126 is disposed between the insulating sheet 119 and the radial part 113. The insulating sheet 119 is disposed between the conductive sheet 126 and the end cap 114.

In some embodiments, the first current collector 102 is further connected to the housing 110, the first current collector 102 is recessed in the housing 110. In one embodiment, a periphery of the first current collector 102 and the housing 110 are connected by welding.

In some embodiments, the first current collector 102 is made of aluminum material and the second current collector 108 is made of copper material. The terminal post 111 is made of copper. The conductive sheet 126 is made of copper material.

It should be noted that the material of the first current collector 102 is not merely limited to aluminum, the first current collector 102 can also be made using other materials, while the material of the second current collector 108, the material of the terminal post 111 and the material of the conductive sheet are not only limited to copper, other materials can also be used according to the actual situation. In the production process, two ends of the spiral-wound cell 101 are welded with the first current collector 102 and the second current collector 108, respectively. The spiral-wound cell 101 is sleeved on the insulating sleeve 109 and is inserted into the housing 110. A welding needle inserts into the fluid injection hole 103 of the first current collector and makes the second current collector to be welded with the rear of the terminal post 111 through a center shaft hole of the spiral-wound cell 101. Then, the first current collector 102 and an opening of the housing110 are pressed together and are welded using a periphery welding sealing process, the foil material of the cathode is naturally compressed. A part of the vacant foil material of the anode can be precompressed after the first current collector 102 is welded, electrolytes are injected through the electrolyte injection hole 103 of the first current collector 102. Negative pressure is further pumped out from this hole through the negative pressure formation, so that produced gas is pumped out during battery cell formation. Then, after the cover plate 100 is placed in the accommodating cavity 106, an end surface welding is used to seal the gap between the cover plate 100 and the first current collector 102.

In some embodiments, the battery cell is a cylindrical battery cell. In one embodiment, the battery cell is a power battery cell.

In some embodiments, the battery cell has a diameter ranging from 21 mm to 60mm, and has a height ranging from 500 mm to 1500 mm.

In one or some embodiments, a battery is further provided, the battery includes the battery cell provided in the at least one embodiment.

## Claims

1. A battery cell, which comprises:
a spiral-wound cell (101);
a first current collector (102), the first current collector (102) is connected to one end of the spiral-wound cell (101), and the first current collector (102) is provided with an electrolyte injection hole (103); and
a cover plate (100), the cover plate (100) is connected to the first current collector (102), and the first current collector (102) is located between the spiral-wound cell (101) and the cover plate (100), in order that the electrolyte injection hole (103) is sealed by the cover plate (100);
**characterized in that**, one side of the cover plate (100) facing the first current collector (102) is provided with first bursting line(s) (104) which is/are shaped as groove structure(s).

2. The battery cell according to claim 1, **characterized in that**, the first current collector (102) is provided with an inner side and an outer side which are opposed to each other, the inner side of the first current collector (102) is connected to the spiral-wound cell (101), and the cover plate (100) is connected to the outer side of the first current collector (102); the inner side of the first current collector (102) faces the spiral-wound cell (101), and is provided with a plurality of second bursting lines (105), and the plurality of second bursting lines (105) are shaped as groove structures.

3. The battery cell according to claim 2, **characterized in that**, the number of the second bursting lines (105) is plural and the plurality of the second bursting lines (105) are arranged to be spaced apart around a circumference of the electrolyte injection hole (103) in distribution.

4. The battery cell according to any one of claims 1-3, **characterized in that**, the first current collector (102) is arranged at an anode of the spiral-wound cell (101), the electrolyte injection hole (103) is arranged at a center of the first current collector (102), the outer side of the first current collector (102) is provided with an accommodation cavity (106) recessed from one end of the spiral-wound cell (101) to the other end of the spiral-wound cell (101), the cover plate (100) is fixed in the accommodation cavity (106).

5. The battery cell according to claim 4, **characterized in that**, a plurality of bypass holes are arranged on the first current collector (102), the plurality of the bypass holes are spaced apart around the circumference of the electrolyte injection hole (103) in distribution.

6. The battery cell according to claim 4, **characterized in that**, the battery cell further comprises a second current collector (108), the second current collector (108) is connected to an opposite end of the spiral-wound cell (101), and is arranged at a cathode of the spiral-wound cell (101).

7. The battery cell according to claim 6, **characterized in that**, the battery cell further comprises a housing (110) and a terminal post (111), the spiral-wound cell (101) is arranged to insert in the housing (110), the terminal post (111) is fitted to the housing (110) in an insulation manner through a first insulating member (122);
the terminal post (111) comprises a post part (112) and a radial part (113) being connected to one end of the post part (112); the radial part (113) has a diameter greater than a diameter of the post part (112), so that the terminal post (111) is fixed on the housing (110); the radial part (113) is connected to the second current collector (108).

8. The battery cell according to any one of claims 1-3, wherein the battery cell is a cylindrical battery cell.

9. A battery, comprising the battery cell according to any one of claims 1-8.

## Patentansprüche

1. Batteriezelle, die umfasst:
eine spiralförmig gewickelte Zelle (101);
einen ersten Stromkollektor (102), wobei der erste Stromkollektor (102) mit einem Ende der spiralförmig gewickelten Zelle (101) verbunden ist und der erste Stromkollektor (102) mit einer Elektrolyt-Einspritzöffnung (103) versehen ist; und
eine Abdeckplatte (100), wobei die Abdeckplatte (100) mit dem ersten Stromkollektor (102) verbunden ist und der erste Stromkollektor (102) zwischen der spiralförmig gewickelten Zelle (101) und der Abdeckplatte (100) angeordnet ist, so dass die Elektrolyt-Einspritzöffnung (103) durch die Abdeckplatte (100) verschlossen wird;
**dadurch gekennzeichnet, dass** eine Seite der Abdeckplatte (100), die dem ersten Stromkollektor (102) zugewandt ist, mit einer oder mehreren ersten Bruchlinien (104) versehen ist, die eine Gestalt wie Nutstruktur aufweisen.

2. Batteriezelle nach Anspruch 1, **dadurch gekennzeichnet, dass** der erste Stromkollektor (102) mit einer Innenseite und einer Außenseite versehen ist, die einander gegenüberliegen, wobei die Innenseite des ersten Stromkollektors (102) mit der spiralförmig gewickelten Zelle (101) verbunden ist und die Abdeckplatte (100) mit der Außenseite des ersten Stromkollektors (102) verbunden ist; wobei die Innenseite des ersten Stromkollektors (102) der spiralförmig gewickelten Zelle (101) zugewandt ist und mit einer Mehrzahl von zweiten Bruchlinien (105) versehen ist, wobei die Mehrzahl von zweiten Bruchlinien (105) eine Gestalt wie Nutstruktur aufweist.

3. Batteriezelle nach Anspruch 2, **dadurch gekennzeichnet, dass** die Anzahl der zweiten Bruchlinien (105) plural ist und die Mehrzahl der zweiten Bruchlinien (105) beabstandet und verteilt um den Umfang der Elektrolyt-Einspritzöffnung (103) angeordnet ist.

4. Batteriezelle nach einem der Ansprüche 1 bis 3, **dadurch gekennzeichnet, dass** der erste Stromkollektor (102) an einer Anode der spiralförmig gewickelten Zelle (101) angeordnet ist, die Elektrolyt-Einspritzöffnung (103) in der Mitte des ersten Stromkollektors (102) angeordnet ist, die Außenseite des ersten Stromkollektors (102) mit einem Aufnahmehohlraum (106) versehen ist, der von einem Ende der spiralförmig gewickelten Zelle (101) zu dem anderen Ende der spiralförmig gewickelten Zelle (101) vertieft ist, und die Abdeckplatte (100) in dem Aufnahmehohlraum (106) befestigt wird.

5. Batteriezelle nach Anspruch 4, **dadurch gekennzeichnet, dass** eine Mehrzahl von Ableitungsöffnungen auf dem ersten Stromkollektor (102) angeordnet ist, wobei die Mehrzahl von Ableitungsöffnungen um den Umfang der Elektrolyt-Einspritzöffnung (103) verteilt und beabstandet angeordnet ist.

6. Batteriezelle nach Anspruch 4, **dadurch gekennzeichnet, dass** die Batteriezelle ferner einen zweiten Stromkollektor (108) umfasst, wobei der zweite Stromkollektor (108) mit einem entgegengesetzten Ende der spiralförmig gewickelten Zelle (101) verbunden ist und an einer Kathode der spiralförmig gewickelten Zelle (101) angeordnet ist.

7. Batteriezelle nach Anspruch 6, **dadurch gekennzeichnet, dass** die Batteriezelle ferner ein Gehäuse (110) und ein Endstück (111) umfasst, wobei die spiralförmig gewickelte Zelle (101) in das Gehäuse (110) eingesetzt wird, das Endstück (111) durch ein erstes Isolierelement (122) am Gehäuse (110) isoliert angebracht wird;
das Endstück (111) einen Axialteil (112) und einen Radialteil (113) umfasst, der mit einem Ende des Axialteils (112) verbunden ist; wobei der Radialteil (113) einen Durchmesser aufweist, der größer als der Durchmesser des Axialteils (112) ist, so dass das Endstück (111) am Gehäuse (110) befestigt wird; der Radialteil (113) mit dem zweiten Stromkollektor (108) verbunden ist.

8. Batteriezelle nach einem der Ansprüche 1 bis 3, wobei die Batteriezelle eine zylindrische Batteriezelle ist.

9. Batterie, umfassend die Batteriezelle nach einem der Ansprüche 1 bis 8.

## Revendications

1. Élément de batterie, qui comprend:
une cellule enroulée en spirale (101);
un premier collecteur de courant (102), le premier collecteur de courant (102) étant connecté à une extrémité de la cellule enroulée en spirale (101), et le premier collecteur de courant (102) étant pourvu d'un orifice d'injection d'électrolyte (103); et
une plaque de couverture (100), la plaque de couverture (100) étant connectée au premier collecteur de courant (102), et le premier collecteur de courant (102) étant situé entre la cellule enroulée en spirale (101) et la plaque de couverture (100), de sorte que l'orifice d'injection d'électrolyte (103) soit scellé par la plaque de couverture (100);
**caractérisé en ce qu'**un côté de la plaque de couverture (100), orienté vers le premier collecteur de courant (102), est pourvu d'une ou plusieurs premières lignes de rupture (104) ayant une structure en forme de rainure.

2. L'élément de batterie selon la revendication 1, **caractérisé en ce que** le premier collecteur de courant (102) est pourvu d'un côté interne et d'un côté externe opposés l'un à l'autre, le côté interne du premier collecteur de courant (102) est connecté à la cellule enroulée en spirale (101), et la plaque de couverture (100) est connectée au côté externe du premier collecteur de courant (102); le côté interne du premier collecteur de courant (102), orienté vers la cellule enroulée en spirale (101), et est pourvu d'une pluralité de deuxièmes lignes de rupture (105), et cette pluralité de deuxièmes lignes de rupture (105) a une structure en forme de rainure.

3. L'élément de batterie selon la revendication 2, **caractérisé en ce que** le nombre de deuxièmes lignes de rupture (105) est multiple, et la pluralité de deuxièmes lignes de rupture (105) est disposée de manière espacée autour de la circonférence de l'orifice d'injection d'électrolyte (103).

4. L'élément de batterie selon l'une quelconque des revendications 1 à 3, **caractérisé en ce que** le premier collecteur de courant (102) est disposé au niveau de l'anode de la cellule enroulée en spirale (101), l'orifice d'injection d'électrolyte (103) est situé au centre du premier collecteur de courant (102), le côté externe du premier collecteur de courant (102) est pourvu d'une cavité d'accueil (106) enfoncée d'une extrémité de la cellule enroulée en spirale (101) à l'autre, et la plaque de couverture (100) est fixée dans la cavité d'accueil (106).

5. L'élément de batterie selon la revendication 4, **caractérisé en ce qu'**une pluralité d'orifices de dérivation est disposée sur le premier collecteur de courant (102), ladite pluralité d'orifices de dérivation étant espacée autour de la circonférence de l'orifice d'injection d'électrolyte (103) pendant la distribution.

6. L'élément de batterie selon la revendication 4, **caractérisé en ce que** l'élément de batterie comprend en outre un second collecteur de courant (108), le second collecteur de courant (108) étant connecté à l'extrémité opposée de la cellule enroulée en spirale (101) et étant disposé au niveau de la cathode de la cellule enroulée en spirale (101).

7. L'élément de batterie selon la revendication 6, **caractérisé en ce que** l'élément de batterie comprend en outre un boîtier (110) et une borne (111), la cellule enroulée en spirale (101) étant insérée dans le boîtier (110), la borne (111) étant montée sur le boîtier (110) de manière isolée à l'aide d'un premier élément isolant (122);
la borne (111) comprend une partie axiale (112) et une partie radiale (113) connectée à une extrémité de la partie axiale (112); la partie radiale (113) a un diamètre supérieur à celui de la partie axiale (112), de sorte que la borne (111) est fixée sur le boîtier (110); la partie radiale (113) est connectée au second collecteur de courant (108).

8. L'élément de batterie selon l'une quelconque des revendications 1 à 3, dans lequel l'élément de batterie est un élément de batterie cylindrique.

9. Batterie, comprenant l'élément de batterie selon l'une quelconque des revendications 1 à 8.
